# EUROPEAN PATENT SPECIFICATION

(11) **EP 1 986 895 B1**
(45) Date of publication and mention of the grant of the patent: **04.11.2015**
(21) Application number: 06716932.6
(22) Date of filing: 24.02.2006
(51) Int. Cl.: B60R 21/34, B60R 19/20

(54) **BUMPER AIR BAG**
STOSSFÄNGER-AIRBAG
AIRBAG DE PARE-CHOCS

(43) Date of publication of application: 05.11.2008
(73) Proprietor: Autoliv Development AB, 447 83 Vårgårda (SE)
(72) Inventor: PIPKORN, Bengt, S-433 70 Sävedalen (SE)
(74) Representative: Olsson, Jessica
(86) International application number: PCT/SE2006/000242
(87) International publication number: WO 2007/097666

(56) References cited:
- EP-A2- 1 319 559
- WO-A-01/81121
- WO-A1-01/81121
- DE-A1- 10 062 560
- DE-A1- 10 062 560
- DE-A1- 10 319 284
- DE-A1- 10 319 284
- JP-A- 2005 199 787
- US-A1- 2005 035 608
- US-B2- 6 942 261
- PATENT ABSTRACTS OF JAPAN vol. 2003, no. 12 05 December 2003 & JP 2005 112210 A (DAICEL CHEM IND LTD) 28 April 2005
- DATABASE WPI Week 200551, Derwent Publications Ltd., London, GB; Class Q17, AN 2005-502507, XP003016839 & JP 2005 199787 A (TOYOTA JIDOSHA KK) 28 July 2005

## Description

### Field of the invention

The present invention relates to an inflatable airbag system for use in the front or rear part of a vehicle. The airbag system comprises a folded airbag which is stored in a housing, at least one inflator for dispensing inflation fluid into the airbag during deployment. Further the housing has a front door which will open when deploying the airbag.

### Technical background

Various products and methods have been developed to reduce the damage to passengers and vehicles in vehicles collisions. Vehicle airbags has been developed for deployment upon sensing of a vehicle collision. These airbags are usually located in or adjacent to the passenger compartment to protect an occupant from serious injuries in frontal impacts, side impacts and in roll-over accidents.

There are particular problems in collisions with vehicles having different height or road clearance, since there are several risks associated with this kind of collisions, for example one vehicle sliding up on top of the other vehicle.

Other methods to reduce forces created in a collision includes crash zones at the front and rear of a vehicle designed to absorb energy by controlled structural collapsing or by use of releasable parts of the structure, or by using structural parts which can be pressurized by gas for taking high loads.

Another approach is to use externally mounted airbags which inflates before an impact with an object, vehicle or pedestrian, and hence forms a fluid filled structure in front or rear of the vehicle. One such airbag is described in GB 2 336 572 which discloses an airbag mounted inside the vehicle bumper such that the airbag will deploy downwards from the bumper with the purpose to protect a pedestrian in a collision. Another airbag arrangement of this kind is shown in WO 02055343 where the airbag is mounted inside a vehicle bumper. The airbag is deployed in direction towards an approaching object.

However, in low severe impacts when the bumper should take all the loads (when there is no need for airbag) it might be difficult to keep the airbag system intact in the bumper when the bumper is hit by the impact, the airbag system may be damaged. In such a case it might be necessary to replace both the bumper and the bumper airbag.

WO01/81121A1 discloses an air bumper located at the lower part of a front and/or rear bumper of a motor vehicle in accordance with the preamble of claim 1.

### Disclosure of invention

One object of the present invention is to achieve a robust airbag system with improved safety for impacts between different kind of vehicles.

A further object according to the present invention is to provide an improved impact protection for pedestrians.

The above mentioned objects and other objects, that will be clear from the following description is obtained by an airbag system according to the enclosed claims.

According to an aspect of the invention an airbag system for a vehicle comprises a folded airbag which is stored in a housing, at least one inflator for dispensing inflation fluid into the airbag during deployment, the housing having a front cover or door which will open when deploying the airbag. The airbag system is positioned below the bumper of the vehicle and directed in the longitudinal direction of the vehicle, whereby the airbag, during deployment, expands below and in front of the bumper. The airbag unit according to the invention is hence mounted independently from the bumper. In this way two independent bumper systems will be available, a conventional bumper for less impacts and an airbag for severe impacts. Due to the position below the conventional bumper, the airbag will efficiently fill the area/volume between the bumper and the ground to prevent vehicles, pedestrians or other objects from coming into this area during an impact. Since the airbag is positioned in a direction forwardly and longitudinal of the vehicle it will gradually fill this area during deployment for higher vehicles such as Vans, Trucks etc. This airbag system will act as an impact protection for higher vehicles for reducing the damage to a smaller vehicle due to a collision, but also for preventing leg injuries of pedestrians.

Of course it is possible to apply the airbag system at the rear of a vehicle, and it will hence act in the opposite direction to what is described here.

Preferably the housing and cover forms a passage, which is directed principally in the longitudinal direction of the vehicle, for guiding the expanding airbag. By means of this passage it is possible to conveniently direct the deployment of the airbag in a desired direction by the shape and direction of this passage.

Advantageously the cover is opened during deployment of the airbag providing a guiding surface for the expanding airbag. This will guide the airbag to a quick deployment in the desired direction, and further supporting the airbag during the impact, for example preventing the airbag from being pushed in, backwards, under the vehicle.

In a preferred embodiment the airbag system is provided as a separate unit, positioned at a distance in a vicinity of the ground. With this position it is easy to quickly achieve an inflated airbag in the desired area/volume. Further it is easy to exchange the separate unit after an impact, since it is a separate unit this will minimize cost and effort for the exchange.

Preferably the pivoting door is biased towards the closed position by a torsion spring. Deployment of the airbag will affect the pivoting door, tension the torsion spring and force the door to an open position.

The airbag unit is moving downwards towards the ground during deployment, as mentioned above. This is beneficial for achieving a good position for firing of the airbag.

In a preferred embodiment the cover or door of the housing is provided as a secondary lower bumper for also taking impact forces. This requires a stabile design of the door and the housing to resist the impact forces. This low position, below the conventional bumper, is advantageous since it will act as a rear barrier for the airbag as well as a low bumper for preventing a vehicle or object to slide under the vehicle.

### Brief description of drawings

By way of example, currently preferred embodiments of the present invention will now be described with reference to the accompanying figure of drawing in which;
Fig 1 discloses in a side view a front portion of a vehicle with the airbag system mounted under the bumper according to the invention.
Fig 2 shows in a side view a front portion of a vehicle with the airbag system in a deployed condition.
Fig 3 shows in cross section the airbag system according to the invention.
Fig 4a discloses in cross section the airbag system in fig 3 in an inflated condition.
Fig 4b discloses in a top view an embodiment of the airbag system.

### Description of Preferred Embodiment

The airbag unit is preferably arranged in a housing 2, positioned below the bumper 3, provided with a pivot joint or hinge 7 to allow the airbag 1 to deploy forward. Preferably the housing 2 has a frontal part 5 arranged as a hinged door or as a (plastic) cover with a split-line, that will open when the airbag 1 deploy. The door 5 is initially in a closed position by a closing/locking mechanism which may be a torsion spring mounted in the hinge 6, the door is pressed upwards towards the bumper by the torsion spring, or alternatively by using a linear spring pulling the door 5 upwards, a strap or a breakable element adapted to break when the airbag 1 is deployed for releasing the door.

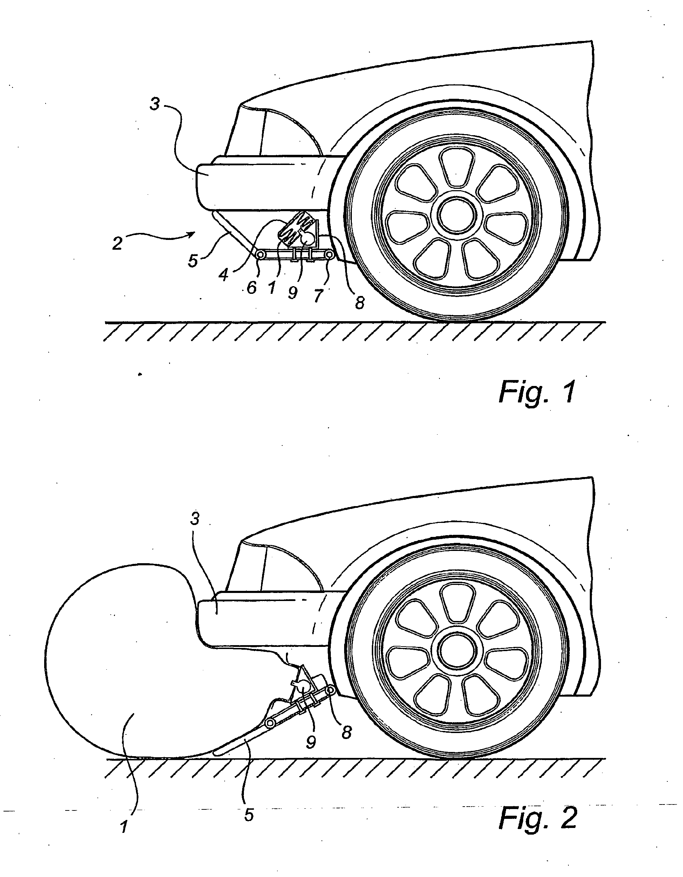

The opening mechanism of the door 5, the door may consist of two parts hinged to each other as shown in fig 1, preferably including a stop to prevent the door from hitting the ground, to prevent it from damages when opening. This embodiment is further shown in fig 1, where the pivot joints or hinges 6,7 provides the airbag housing 2 to open and also position the airbag 1 in position for deployment. As shown in fig 2 the airbag 1 will rotate and move downwards to a lower position during deployment. The front door 5 and the floor part of the housing which is attached to the airbag will rotate and move downwards due to the firing of the airbag, and consequently the closing force of the spring or locking mechanisms in the joints 6, 7 will be overcome. As shown in fig 2 the airbag unit will tilt downwards and inflate firstly in the area below the bumper and further deploy in the area in front of the car. Since the airbag unit is moving downwards during deployment a desired road clearance will remain in the inactive position (fig 1).

Inside the housing 2 the airbag 1 is packaged in a cover 4, which will rupture due to inflation of the airbag. Further inflation of the airbag will affect the housing 2 and open the door 5 by forcing the spring and pivot joint 6, 7 to rotate downwards.

The airbag housing 2 can be provided as one unit, including all parts, which can be mounted directly on a vehicle chassis below the bumper 3.

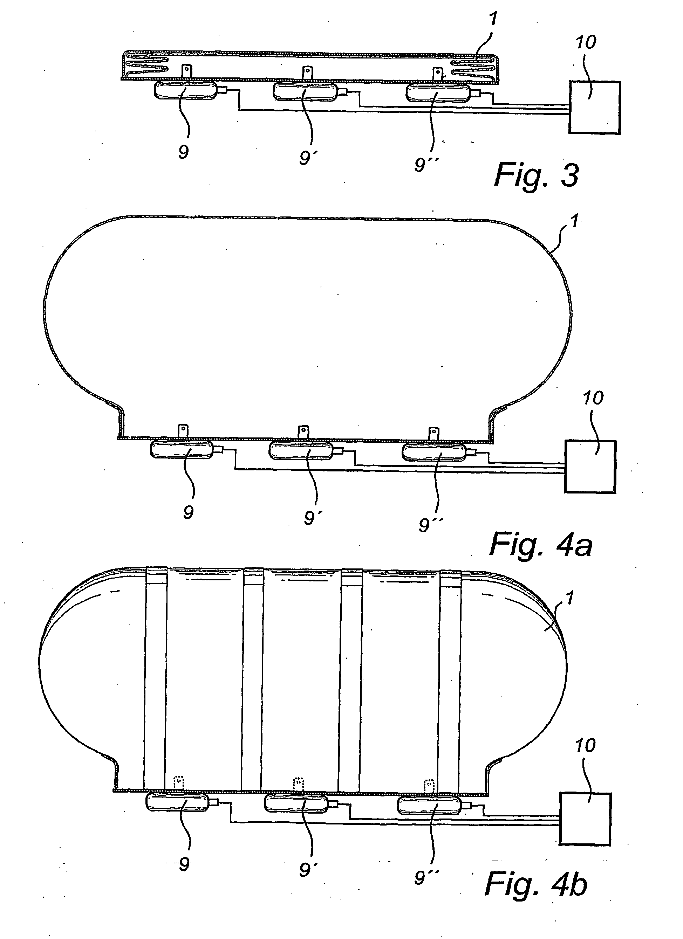

The airbag housing 2 includes an airbag unit, one or several airbags are folded and packaged in a housing/box with a door or cover which opens when the airbag 1 inflates, at least one gas generator 9, which may be a pyrotechnic charge or a compressed gas stored in a pressure vessel or a combination of a pyrotechnic charge and a compressed gas, a gas passage from the gas generator 9 to the airbag (see figures showing the gas passage of the gas generator i.e. the small tower on the gas generator with radial gas outlets) an initiator (ignitor) for initiating the gas generator, electrical connection between the initiator and a control unit 10. In fig 3 is shown an embodiment with three gas generators 9, 9', 9'' and one airbag 1, it is of course possible to combine different numbers of gas generators and airbags for achieving a desired result. The control unit 10 controls firing of the gas generators 9 via initiators and allows the gas generators to be fired independently of each other. One or several gas generators can be fired independently of each other. One or several gas generators, depending on the severity of the impact, may be fired. If more than one gas generator is fired, they may be fired in one sequence or all at the same time. The control unit 10 is preferably connected to a pre-crash (early warning system) using e.g. radar or infrared detection devices (not shown). In fig 4a is shown the embodiment with one airbag which is inflated by three gas generators. Another embodiment is shown in fig 4b, where the airbag is provided with straps or bands for reinforcement of the airbag. The airbag 1, when inflated, is preferably tube shaped having a circular cross section with a diameter of approximately 0,3 meter, a length of 1,5-2 meter and a volume of approximately 170 dm³. The airbag material, i.e. the fabric, may consist of two textile layers glued together by silicon. The surface of the bag fabric is coated with a layer of silicon (25 gram) on each side. The airbag in fig 4b is reinforced by a number of straps or bands, fixed on the surface of the airbag. Finally the entire airbag is covered or surrounded by a layer of polypropylene fabric.

## Claims

1. An airbag system for a vehicle comprising a folded airbag (1) which is stored in a housing (2), at least one inflator (9) for dispensing inflation fluid into the airbag (1) during deployment, said housing (2) having a front cover (5) which will open when deploying the airbag (1) wherein said airbag system is positioned below the bumper (3) of the vehicle and directed in the longitudinal direction of the vehicle, whereby the airbag (1), during deployment, expands in front of the bumper (3) **characterized in that** said front cover (5) is a pivotable front cover provided with a first pivot joint (7) to allow the airbag to deploy forwardly and said front cover consists of two parts hinged to each other by a second pivot joint (6), where the two parts are a front door and the floor part of the housing (2) which is attached to the airbag (1), and both pivot joints (6, 7) each comprises a spring or locking mechanism and the pivot joints (6, 7) allow the parts to rotate and move downwards due to the firing of the airbag and consequently the closing force of the spring or the locking mechanism in the pivot joints (6, 7) will be overcome.

2. An airbag system according to claim 1, wherein said housing (2) and cover (5) forms a passage, which is directed principally in the longitudinal direction of the vehicle, for guiding the expanding airbag (1).

3. An airbag system according to any of the preceding claims, wherein said cover is opened during deployment of the airbag (1) providing a guiding surface for the expanding airbag (1).

4. An airbag system according to any of the preceding claims, wherein said airbag system is provided as a separate unit, positioned at a distance in a vicinity of the ground.

5. An airbag system according to any of the preceding claims, wherein said front cover (5) is biased towards the closed position by a torsion spring.

6. An airbag system according to any of the preceding claims, wherein said airbag unit is moving downwards towards the ground during deployment.

7. An airbag system according to any of the preceding claims, wherein said housing (2) is provided as a secondary lower bumper for taking impact forces.

## Patentansprüche

1. Airbagsystem für ein Fahrzeug, das einen zusammengelegten Airbag (1) umfasst, der in einem Gehäuse (2) untergebracht ist, mindestens einen Gasgenerator (9) zum Abgeben von Fülllfluid in den Airbag (1) während des Entfaltens, wobei das Gehäuse (2) eine vordere Abdeckung (5) aufweist, die sich öffnet, wenn der Airbag (1) entfaltet wird, wobei das Airbagsystem unter dem Stoßfänger (3) des Fahrzeugs platziert und in die Längsrichtung des Fahrzeugs gerichtet ist, wodurch sich der Airbag (1) während der Entfaltung vor dem Stoßfänger (3) ausdehnt, **dadurch gekennzeichnet, dass** die vordere Abdeckung (5) eine schwenkbare vordere Abdeckung ist, die mit einem ersten Drehgelenk (7) versehen ist, damit der Airbag sich nach vorn entfalten kann, und die vordere Abdeckung aus zwei Teilen besteht, die über ein zweites Drehgelenk (6) klappbar aneinander befestigt sind, wobei es sich bei den beiden Teilen um eine vordere Tür und den Bodenteil des Gehäuses (2) handelt, der an dem Airbag (1) befestigt ist, und beide Drehgelenke (6, 7) jeweils eine Feder oder einen Arretiermechanismus umfassen und die Drehgelenke (6, 7) ermöglichen, dass sich die Teile aufgrund des Zündens des Airbags drehen und nach unten bewegen und folglich die Schließkraft der Feder oder des Arretiermechanismus in den Drehgelenken (6, 7) überwunden wird.

2. Airbagsystem nach Anspruch 1, wobei das Gehäuse (2) und die Abdeckung (5) einen hauptsächlich in die Längsrichtung des Fahrzeugs gerichteten Durchgang zum Führen des sich ausdehnenden Airbags (1) bilden.

3. Airbagsystem nach einem der vorhergehenden Ansprüche, wobei die Abdeckung während der Entfaltung des Airbags (1) geöffnet wird, wodurch eine Leitfläche für den sich ausdehnenden Airbag (1) bereitgestellt wird.

4. Airbagsystem nach einem der vorhergehenden Ansprüche, wobei das Airbagsystem als separate Einheit vorgesehen ist, die in einem Abstand in einer Nähe des Erdbodens platziert ist.

5. Airbagsystem nach einem der vorhergehenden Ansprüche, wobei die vordere Abdeckung (5) mit einer Schenkelfeder in Richtung der geschlossenen Stellung vorgespannt ist.

6. Airbagsystem nach einem der vorhergehenden Ansprüche, wobei sich die Airbageinheit während der Entfaltung nach unten in Richtung des Erdbodens bewegt.

7. Airbagsystem nach einem der vorhergehenden Ansprüche, wobei das Gehäuse (2) als sekundärer unterer Stoßfänger zum Aufnehmen von Stoßkräften vorgesehen ist.

## Revendications

1. Système d'airbag pour un véhicule, comprenant un airbag plié (1) qui est rangé dans un boîtier (2), au moins un gonfleur (9) destiné à distribuer un fluide de gonflage dans l'airbag (1) pendant le déploiement, ledit boîtier (2) comportant un couvercle avant (5) qui s'ouvrira lors du déploiement de l'airbag (1), ledit système d'airbag étant positionné sous le pare-chocs (3) du véhicule et orienté dans la direction longitudinale du véhicule, ce par quoi l'airbag (1) s'étend devant le pare-chocs (3) pendant le déploiement, **caractérisé en ce que** ledit couvercle avant (5) est un couvercle avant pivotant doté d'une première articulation à pivot (7) pour permettre à l'airbag de se déployer vers l'avant et ledit couvercle avant est constitué de deux parties articulées l'une avec l'autre par une seconde articulation à pivot (6), où les deux parties sont une porte avant et la partie de fond du boîtier (2) qui est raccordée à l'airbag (1), et les deux articulations à pivot (6, 7) comprennent chacune un ressort ou un mécanisme de verrouillage et les articulations à pivot (6, 7) permettent aux parties de tourner et de se déplacer vers le bas en raison de l'amorçage de l'airbag et par conséquent la force de fermeture du ressort ou du mécanisme de verrouillage dans les articulations à pivot (6, 7) sera surmontée.

2. Système d'airbag selon la revendication 1, dans lequel ledit boîtier (2) et ledit couvercle (5) forment un passage qui est orienté principalement dans la direction longitudinale du véhicule, pour guider l'airbag (1) qui s'étend.

3. Système d'airbag selon l'une quelconque des revendications précédentes, dans lequel ledit couvercle est ouvert pendant le déploiement de l'airbag (1) ce qui crée une surface de guidage pour l'airbag (1) qui s'étend.

4. Système d'airbag selon l'une quelconque des revendications précédentes, dans lequel ledit système d'airbag est fourni en tant qu'unité séparée, positionnée à une distance à proximité du sol.

5. Système d'airbag selon l'une quelconque des revendications précédentes, dans lequel ledit couvercle avant (5) est précontraint en direction de la position fermée par un ressort de torsion.

6. Système d'airbag selon l'une quelconque des revendications précédentes, dans lequel ladite unité d'airbag se déplace vers le bas en direction du sol pendant le déploiement.

7. Système d'airbag selon l'une quelconque des revendications précédentes, dans lequel ledit boîtier (2) est fourni en tant que pare-chocs inférieur secondaire pour recevoir des forces d'impact.
